# EUROPEAN PATENT SPECIFICATION

(11) **EP 2 944 240 B1**
(45) Date of publication and mention of the grant of the patent: **11.04.2018**
(21) Application number: 14168701.2
(22) Date of filing: 16.05.2014
(51) Int. Cl.: A47K 10/10, F16B 2/04

(54) **Fixture for mounting an accessory to a wall**
Halterung zur Befestigung eines Zubehörs an einer Wand
Dispositif de fixation pour le montage d'un accessoire sur une paroi

(43) Date of publication of application: 18.11.2015
(73) Proprietor: Geesa BV, 3812 PZ Amersfoort (NL)
(72) Inventor: VAN DAAL, Thomas, 3812 PZ Amersfoort (NL); UITERWIJK, Niels, 3812 PZ Amersfoort (NL); PETERS, Wolfram, 2311 CD Leiden (NL); JANSSEN, Wouter, 2311 CD Leiden (NL)
(74) Representative: De Vries & Metman

(56) References cited:
- EP-A1- 0 409 347
- DE-A1- 19 856 825
- DE-U1- 29 920 923
- US-A- 3 036 803
- US-A- 4 718 625
- US-A1- 2003 230 693

## Description

The present invention relates to a fixture for mounting an accessory, in particular a bathroom accessory, such as a towel bar, a towel ring, a soap dish, or a shampoo rack, to a wall. Bathroom accessories usually have a mounting end configured to be attached to a mounting plate mounted to the bathroom wall. Such a mounting end may for example be secured to the mounting plate utilizing a set screw, such as the mounting system disclosed in WO 2014/054000.

Bathrooms typically offer limited space for a person installing a bathroom accessory. The small size of such a set screw and its intended use location, usually adjacent the bathroom wall, may further complicate installation. An installer must screw the set screw utilizing a small screwdriver and having only limited clearance from the bathroom wall. The set screw can easily drop and be lost during installation. Particularly for hotels or cruise ships with large numbers of similarly furnished bathrooms, this can be very inefficient and time consuming.

In order to enable fast mounting wall mounted accessories, it has been proposed to lock the accessories using snap fit connections. Such snap fit connections typically result in a certain amount of play allowing relative movement of the mounting components.

US-A-3 036 803 discloses a fixture using a snap fit connection and corresponding to the preamble of claim 1.

It is an object of the present invention to provide a mounting system for wall mounted accessories allowing quick and easy installation without relative movement between the mounted parts.

The object of the invention is achieved with a fixture according to claim 1.

Having a wedging snap lock combines quick and easy installation with effectively preventing relative movement of the mounted parts.

The wedge surface of the snap lock and the complementary surface of the ledge will typically make an angle with the direction of movement of the cover during realization of the snap fit connection. Suitable wedging action can for example be achieved if this angle is about 40 - 50°. The snap fit movement direction can for example be substantially under right angles with the vertical wall surface.

To provide a reliable attachment, the snap fit is preferably non-releasable. To this end, the snap lock and the ledge may comprise contact faces, e.g., adjacent the wedging surfaces, engaging each other when the cover is in its mounted position. For instance, the contact faces may make a right angle with the direction of the snap fit movement, so they would block release of the snap fit once the snap lock is in its snap position engaging the ledge. More particularly, the contact faces can be vertical, when mounted.

The ledge forms part of the cover, while the snap lock is a movable part of the base. The snap lock is connected to the base by means of a pivot axle to allow a pivot movement between the snap position and a retracted position. The base may comprise a cavity for at least partly receiving the snap lock.

The snap lock is resiliently biased towards its snap position in which it exerts a wedging force to the ledge. The snap lock is pivotable about a pivot axle between the snap position and a retracted position, which may for example be at least partly within a cavity of the base. The pivot axle is perpendicular to a rear face of the base facing a wall when the base is mounted.

The cover may for instance comprise a mounting side provided with a cavity configured to fit over the wall mounted base, the ledge bordering part of the cavity, e.g., forming a lower border of the cavity.

In a specific embodiment, the snap lock comprises a snap body with one side edge configured to engage the ledge, and an opposite side engaging a spring element biasing the snap lock into its snap position. The spring element can for instance be a compression spring, which may for instance be held in the cavity of the base holding the snap lock. The spring element is configured to exert a force in a direction offset from the pivot axle, in order to pivot the snap lock into its snap position.

Although the snap fit as such should preferably be non-releasable, it may be desirable to allow demounting of the accessory from the wall. To this end, the cover may for example comprise a side face with an opening adjacent the ledge at a side of the ledge opposite to the ledge side facing the wall, the opening providing access for a pin to push the snap lock against the action of the spring. This way, the snap lock can be pushed from the ledge and the cover can be removed. To facilitate a good grip for the pin, the snap lock can be provided with a recess for receiving the pin tip, the recess being aligned with the aforementioned opening in the cover when the snap lock is in its snap position.

In a particular embodiment, the cavity of the cover may have an section with an undercut receiving a matching beveled edge of the wall mounted base. The undercut may for example be at a side of the cavity opposite to the ledge engaging the snap lock. For example the undercut section and the ledge may be aligned in a direction coinciding with the direction of the wedging force exerted by the spring and the snap lock. The spring pushes the wedging contact face of the snap lock against the ledge. As a result it pushes the cover downward and pulls the undercut of the cover firmly onto the beveled top edge of the base. This way movement of the cover relative to the base is minimized.

In order to reduce relative movement even further, the inner walls of the cover's cavity can be provided with one or more stops engaging complementary contact faces of the wall mounted base. In a particular embodiment, the inner wall of the cover may comprise inwardly protruding ribs defining a tight fit with a matching section of the base. For instance, the cover may have two oppositely directed ribs extending in a direction substantially perpendicular to the direction of the wedging force exerted by the snap lock.

Some types of bathroom accessories, in particular towel bars, may have two or more mounting ends. In such a case the two or more wall mounted bases are positioned on the wall with tolerance limits to be cancelled out by a certain clearance or play between at least one of the bases and the respective cover. In such a case, two types of covers may be used: one type forming a tight fit with the base and one type providing some clearance, in particular in a horizontal direction. For instance, the covers may have two oppositely directed ribs as explained above, one type of cover having larger ribs to provide a tight fit with the base, while a second type of cover has smaller ribs allowing some movement of the cover relative to the base at least in the direction parallel to the two ribs.

The fixture is particularly useful for mounting bathroom accessories in a building, such as a hotel or cruise ship, or a bungalow park, with a large number of similar bathrooms. The system can also be used for mounting other types of accessories, such as wardrobe or kitchens accessories, to a wall.

The invention is further explained with reference to the accompanying drawings.
- Figure 1:: shows an exemplary embodiment of a fixture according to the invention;
- Figure 2A-D:: show the wall-mounted base of the fixture of Figure 1 in top, front, bottom and side view, respectively;
- Figure 3:: shows the cover of the fixture of Figure 1 in perspective view;
- Figure 4A-C:: show the cover of the fixture of Figure 1 in side view, bottom view and cross section, respectively.
- Figure 5:: shows the fixture of Figure 1 in cross section during installation;
- Figure 6:: shows a central vertical cross section of the fixture of Figure 1;
- Figure 7:: shows a cross section of the fixture along a vertical plane at a distance from the center of the base;
- Figure 8:: shows the wall facing side of the fixture of Figure 1;
- Figure 9:: shows the wall facing side of the fixture with a second type of cover.

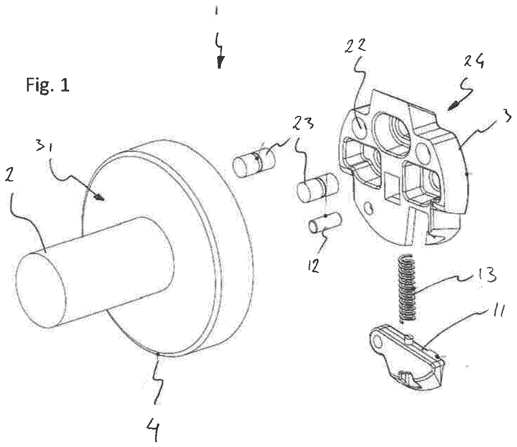

Figure 1 shows an exemplary embodiment of a fixture 1 according to the invention. The fixture 1 is used for mounting a bathroom accessory 2, such as a towel bar, to a wall and comprises a wall-mounted base 3 and a cover 4.

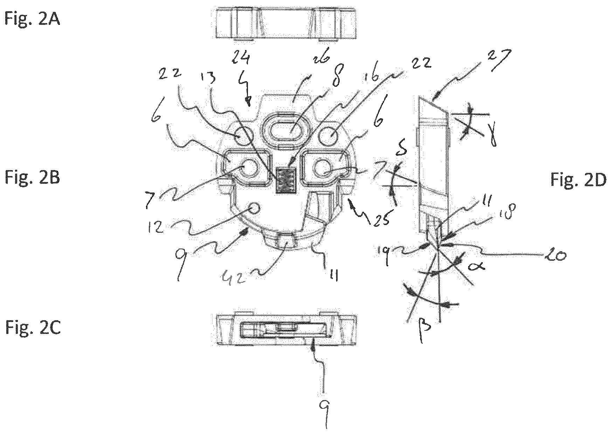

Figures 2A-D show the base 3 in different views. The base 3 is a substantially circular disk. The base 3 comprises two symmetrically arranged recesses 6 providing access to holes 7 for receiving screws for mounting the base 3 to a wall. At a distance above these two recesses 6 is an oval third screw opening 8.

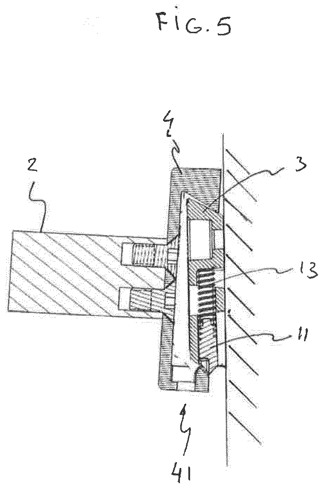

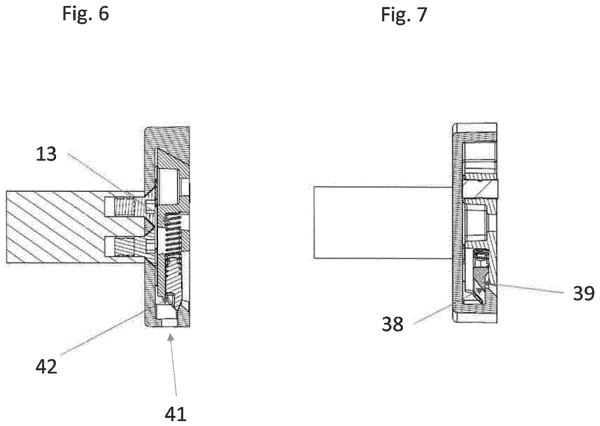

The base 3 comprises a cavity 9 (see Figures 2C and 5) which is accessible from the lower end of the base. A snap lock 11 is held within the cavity 9 and is pivotably connected to the base 3 about a pivot axle 12. At a distance from the pivot axle 12 a compression spring 13 in the cavity 9 biases the snap lock 11 into a snap position, as shown in Figure 6. The snap lock 11 can be tilted into a retracted position within the cavity 9 by pushing the snap lock 11 against the action of the compression spring 13. The spring 13 is accessible via an opening 16 at the side facing the mounted cover 4 (see Figure 2B) and an opening 17 at the side facing the wall when the base 3 is mounted(see Figure 7).

The snap lock 11 has a wedge shaped lower edge 18 with a snap face 19 facing away from the wall mounted side, and a wedging face 20 facing towards the wall mounted side. The snap face 19 makes an angle α of about 40 - 50° with the vertical. The wedging face 20 makes an angle β of about 20 - 30° with the vertical. In this respect "the vertical" refers to a face parallel to the wall facing back face of the base.

The oval shaped screw opening 8 is flanked by two cylindrical recesses 22 holding rubber inserts 23 protruding from the front side surface of the base. After mounting the cover 4 the cover 4 presses the inserts 23 resulting in a pretension reducing possible relative movement.

Just above the rubber inserts 23 the circular outline of the base 3 is interrupted by two cutouts 24 flanking a top section 26 provided with a top edge 27 which is beveled downwardly from the front face to the back face under an angle γ of about 20 - 30° in side view (Figure 2D). Similarly, the circular outline of the base is interrupted by two smaller cutouts 25 at both sides of the cavity 9 providing edges 30 that are beveled under a slightly smaller angle than the bevel angle γ of the top edge 27 of the base 3.

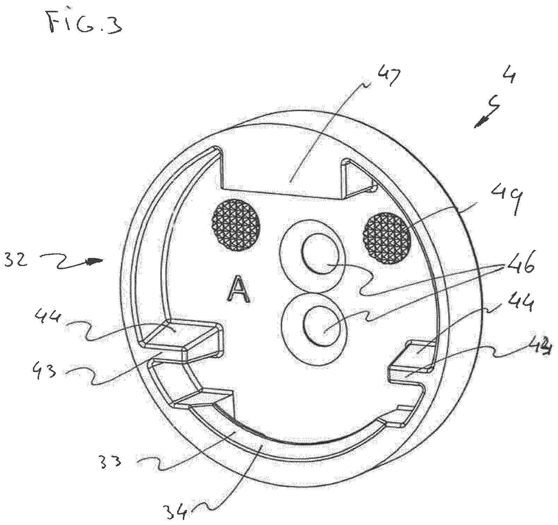

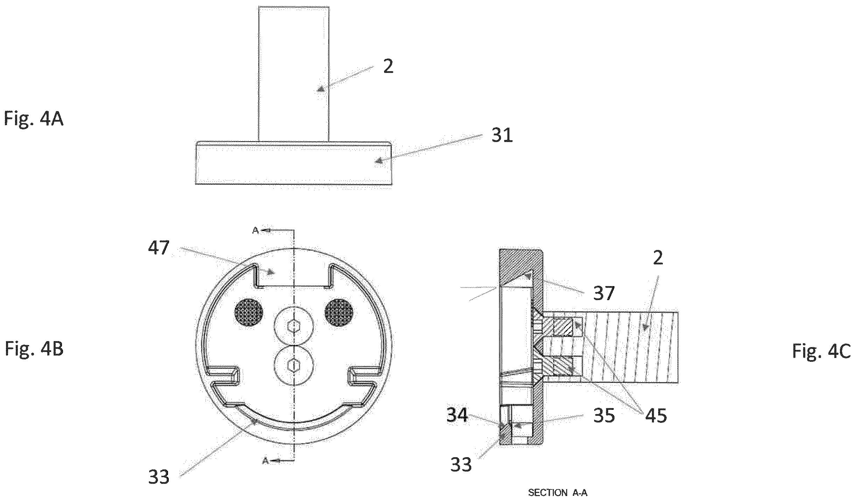

The cover 4 forms an integral connection part of the bathroom accessory 2. The cover 4 is shown in more detail in Figures 3 and 4A-C. In the shown exemplary embodiment the cover 4 is cylindrical having a closed front face 31 hiding the base 3 from view when the cover 4 is mounted onto the base 3. The front face 31 is connected to the rest of the bathroom accessory 2 by means of fasteners 45 (Figure 4C) inserted through openings 46 in the cover 4. At the opposite side, which faces the wall when the cover 4 is mounted, the cover 4 is open and comprises a cavity 32 fitting over the wall mounted base 3, as shown in Figure 6. At its lower side the cover 4 comprises a ledge 33 bordering the cavity 32. The ledge has a beveled outer face 34 and a beveled inner face 35. The outer face 34 is beveled under the same angle α of about 40 - 50° with the vertical, as the snap face 19 of the snap lock 11. The inner face 35 is beveled under the same angle β of about 20 - 30° with the vertical, as the wedging face 20 of the snap lock 11.

At the upper side of the cover 4 the wall of the cavity comprises a downwardly projecting flange 47 with a slanting undercut 37 (see Figure 4C), making substantially the same angle γ of about 20 - 30° in cross section as the upper edge 27 of the base 3. In its lower half the cover 4 is provided with two oppositely directed ribs 43 with a beveled top face 44 matching the beveled edges 30 of the base 3. The distance between the two ribs 44 matches the local width of the base 3 to form a tight fit.

The inner side of the cavity 32 of the cover 4 is further provided with two roughened areas 49 engaging the protruding ends of the inserts 23 of the base 3 when the cover is mounted.

The bathroom accessory 2 is installed by first mounting the base 3 onto a wall using screws or suitable alternative fasteners. The undercut 37 of the inner wall of the cover 4 is then hooked over the beveled top edge 27 of the wall mounted base 3, as shown in Figure 5. The cover 4 is tilted downwardly until the snap face 34 of the ledge 33 of the cover 4 engages the snap face 19 of the snap lock 11. By pushing the ledge 33 the snap lock 11 rotates about the axle 12 and moves into the cavity 9 against the action of the spring 13 into a retracted position allowing passage of the tip of the ledge 33. After the tip of the ledge 33 passes the tip of the snap lock 11 the spring 13 pushes the snap lock 11 downward. The wedging face 20 of the snap lock 11 slides over the wedging face 35 of the ledge 33 and pushes the ledge 33 and the rest of the cover 4 downward, tightly pulling the undercut 37 of the cover over the beveled top edge 27 of the wall mounted base 3. This way, movement of the cover 4 relative to the base 3 is prevented.

To block unintentional release of the cover 4 by tilting it upward, part of the ledge 33 and the snap lock 11 have engaging contact faces 38, 39 making a non-releasable angle with each other. This is shown in Figure 7 showing a vertical cross section at distance from the central vertical cross section of Figure 6. In this section the ledge 33 is provided with a straight vertical inner surface 38 abutting a straight vertical wall section 39 of the lower edge of the snap lock 11.

To allow removal of the cover 4, the lower side of the cover 4 is provided with an opening 41 providing access to the lower edge of the snap lock 11. The snap lock 11 is provided with a recess 42 which is aligned with the opening 41 when the snap lock 11 is in its snap position. The recess 42 is configured to receive the tip of a pin inserted via the opening 41 in the cover 4. To this end, the recess 42 is aligned with the opening 41 when the Using the pin the snap lock 11 can be pushed upwardly against the action of the spring 13 into its retracted position and the cover 4 can be tilted upwardly.

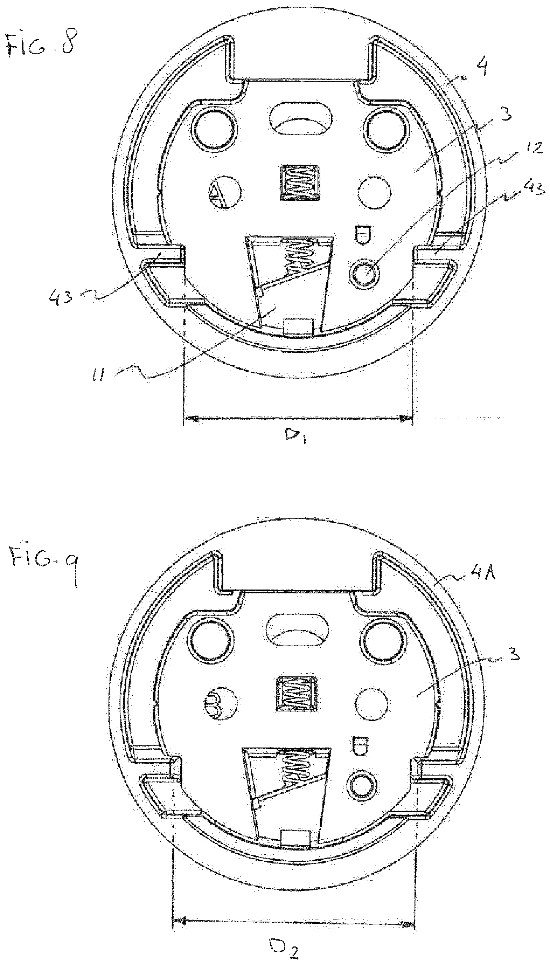

Figure 8 shows a rear view of the fixture 1 with the cover 4 mounted on the base 3. The snap lock 11 is tilted downwardly and wedges against the wedging surface of the ledge 33.
The distance D1 between the tips of the opposite ribs 43 is such that it forms a tight fit with the local width of the base 3.

Figure 9 shows a second type of cover 4A to be used in combination with the cover 4 shown in Figure 8. When a bathroom accessory having two (or more) connecting ends, such as a towel bar, is mounted on a wall, two bases need to be aligned and mounted on the wall. The bases 3 are positioned onto the wall within certain tolerance limits. In such a case a cover 4 as shown in Figure 8 can be used for the first wall mounted base 3, while a cover 4A of the type of Figure 9 can be used for the second wall mounted base 3. In Figure 9, the distance D2 between the two ribs 43 is somewhat longer. This gives some clearance, mainly for horizontal movement of the cover 4A relative to the respective wall mounted base 3, allowing to correct tolerances occurring with the relative positioning of the two wall mounted bases 3.

## Claims

1. Fixture (1) for mounting an accessory to a wall, the fixture comprising:
- a wall-mountable base (3);
- a cover (4);
- a snap lock (11) forming a movable part of the base;
- and a ledge (33) forming part of the cover (4) for engaging the snap lock to lock the cover in a mounted position onto the base, wherein the snap lock comprises a wedging surface (20) engaging a complementary wedging surface (35) of the ledge, when the cover is in its mounted position; and wherein the snap lock is resiliently biased towards a snap position, **characterised in that** the snap lock is pivotable about a pivot axle (12), the pivot axle (12) being substantially perpendicular to a rear face of the base (3) facing a wall when the base (3) is mounted.

2. Fixture according to claim 1, wherein the snap lock (11) and the ledge (33) comprise contact faces (38, 39) engaging each other in a non-releasable manner when the cover (4) is in its mounted position.

3. Fixture according to claim 1 or 2, wherein the snap lock (11) is pivotable between the snap position and a retracted position at least partly within a cavity (9) of the base.

4. Fixture according to any one of the preceding claims, the snap lock (11) comprises a snap body with one side edge (18) configured to engage the ledge (33), and an opposite side engaging a spring element (13) biasing the snap lock into its snap position and providing a wedging force, wherein the spring is configured to exert a snapping and wedging force in a direction offset from the pivot axle (12).

5. Fixture according to any one of the preceding claims, the cover (4) comprising a wall side provided with a cavity (32) configured to fit over the wall mounted base (3), the ledge (33) bordering part of the cavity.

6. Fixture according to claim 5, wherein the cover comprises a side face with an opening (41) at a side of the ledge (33) opposite to the ledge side facing the wall after mounting of the cover, the opening (41) providing access for a pin to push the snap lock against the action of the spring (13).

7. Fixture according to claim 5 or 6, wherein the cavity (32) has a section (47) with an undercut (37) receiving a matching beveled edge (27) of the wall mounted base.

8. Fixture according to any one of the preceding claims 5 - 7, wherein the cavity (32) of the cover (4) is profiled to form a tight fit with the local width of the base (3) to block relative movement in a direction perpendicular to the wedging direction.

9. Fixture according to any one of the preceding claims 5 - 8, wherein the cavity (32) of the cover (4) is profiled to form a clearance fit with the local width of the base (3) to provide clearance for relative movement in a direction perpendicular to the wedging direction.

10. Fixture according to any one of the preceding claims comprising one or more pre-tensioning elements (23) pushing against the cover (4) when it is mounted onto the base plate (3) .

11. Fixture according to claim 10, wherein the pre-tensioning elements include one or more rubber elements held in a corresponding opening or recess in the base (3) with a protruding part pushing against the cover (4) when mounted.

## Patentansprüche

1. Halterung (1) zur Befestigung eines Zubehörs an einer Wand, wobei die Halterung aufweist:
- eine wandmontierbare Basis (3);
- eine Abdeckung (4);
- eine Schnappverriegelung (11), die einen beweglichen Teil der Basis bildet; und
- einen Vorsprung (33), der einen Teil der Abdeckung (4) bildet und in Eingriff mit der Schnappverriegelung zu bringen ist, um die Abdeckung in einer angebrachten Position an der Basis zu verriegeln,
wobei die Schnappverriegelung eine klemmende Oberfläche (20) aufweist, die in Eingriff mit einer komplementären klemmenden Oberfläche (35) des Vorsprungs ist, wenn die Abdeckung in ihrer angebrachten Position ist;
und wobei die Schnappverriegelung nachgiebig zu einer Schnappposition hin vorgespannt ist,
**dadurch gekennzeichnet, dass** die Schnappverriegelung um eine Drehachse (12) drehbar ist, wobei die Drehachse (12) im Wesentlichen senkrecht zu einer der Wand zugewandten Rückfläche der Basis (3) ist, wenn die Basis (3) angebracht ist.

2. Halterung nach Anspruch 1, wobei die Schnappverriegelung (11) und der Vorsprung (33) Kontaktflächen (38, 39) aufweisen, die auf eine nichtlösbare Weise miteinander im Eingriff sind, wenn die Abdeckung (4) in ihrer angebrachten Position ist.

3. Halterung nach Anspruch 1 oder 2, wobei die Schnappverriegelung (11) zwischen einer Schnappposition und einer zurückgezogenen Position zumindest teilweise innerhalb eines Hohlraums (9) der Basis drehbar ist.

4. Halterung nach einem der vorstehenden Ansprüche, wobei die Schnappverriegelung (11) einen Schnappkörper mit einer Seitenkante (18) aufweist, die konfiguriert ist, mit dem Vorsprung (33) in Eingriff zu treten, und wobei eine gegenüberliegende Seite mit einem Federelement (13) in Eingriff tritt, das die Schnappverriegelung in ihre Schnappposition vorspannt und eine Klemmkraft bereitstellt, wobei die Feder konfiguriert ist, eine Schnapp- und Klemmkraft in eine zur Drehachse (12) versetzte Richtung auszuüben.

5. Halterung nach einem der vorstehenden Ansprüche, wobei die Abdeckung (4) eine Wandseite aufweist, die mit einem Hohlraum (32) versehen ist, der konfiguriert ist, über die wandmontierte Basis (3) zu passen, wobei der Vorsprung (33) einen Teil des Hohlraums begrenzt.

6. Halterung nach Anspruch 5, wobei die Abdeckung eine Seitenfläche mit einer Öffnung (41) auf einer Seite des Vorsprungs (33) aufweist, die der Vorsprungsseite gegenüberliegt, die nach Anbringen der Abdeckung der Wand zugewandt ist, wobei die Öffnung (41) einen Zugang für einen Stift bereitstellt, um die Schnappverriegelung gegen die Wirkung der Feder (13) zu drücken.

7. Halterung nach Anspruch 5 oder 6, wobei der Hohlraum (32) einen Abschnitt (47) mit einer Unterschneidung (37) hat, die eine dazu passende schräge Kante (37) der wandmontierten Basis aufnimmt.

8. Halterung nach einem der vorstehenden Ansprüche 5 bis 7, wobei der Hohlraum (32) der Abdeckung (4) profiliert ist, um einen festen Sitz mit der lokalen Breite der Basis (3) zu bilden, um eine relative Bewegung in eine zur Klemmrichtung senkrechte Richtung zu blockieren.

9. Halterung nach einem der vorstehenden Ansprüche 5 bis 7, wobei der Hohlraum (32) der Abdeckung (4) profiliert ist, um einen lockeren Sitz mit der lokalen Breite der Basis (3) zu bilden, um ein Spiel für eine relative Bewegung in eine zur Klemmrichtung senkrechte Richtung bereitzustellen.

10. Halterung nach einem der vorstehenden Ansprüche, aufweisend ein oder mehrere vorspannende Elemente (23), die gegen die Abdeckung (4) drücken, wenn sie an der Basisplatte (3) angebracht ist.

11. Halterung nach Anspruch 10, wobei die vorspannenden Elemente ein oder mehrere Gummielemente aufweisen, die in einer entsprechenden Öffnung oder Aussparung in der Basis (3) gehalten werden und einen vorspringenden Teil haben, der gegen die Abdeckung (4) drückt, wenn die Abdeckung (4) angebracht ist.

## Revendications

1. Élément de fixation (1) pour monter un accessoire sur un mur, l'élément de fixation comprenant :
- une base pouvant être montée sur un mur (3) ;
- un cache (4) ;
- un verrou d'accrochage (11) formant une partie mobile de la base ;
- et un rebord (33) faisant partie du cache (4) pour enclencher le verrou d'accrochage afin de verrouiller le cache dans une position montée sur la base,
dans lequel
le verrou d'accrochage comprend une surface de coincement (20) enclenchant une surface de coincement complémentaire (35) du rebord, lorsque le cache est dans sa position montée ;
et dans lequel le verrou d'accrochage est sollicité de façon résiliente vers une position d'accrochage,
**caractérisé en ce que**
le verrou d'accrochage est pivotant autour d'un axe de pivotement (12), l'axe de pivotement (12) étant sensiblement perpendiculaire à une face arrière de la base (3) en regard d'un mur lorsque la base (3) est montée.

2. Élément de fixation selon la revendication 1, dans lequel le verrou d'accrochage (11) et le rebord (33) comprennent des faces de contact (38, 39) s'enclenchant l'une l'autre de manière non libérable lorsque le cache (4) est dans sa position montée.

3. Élément de fixation selon la revendication 1 ou 2, dans lequel le verrou d'accrochage (11) est pivotant entre la position d'accrochage et une position rétractée au moins en partie au sein d'une cavité (9) de la base.

4. Élément de fixation selon l'une quelconque des revendications précédentes, le verrou d'accrochage (11) comprend un corps d'accrochage avec un bord de côté (18) configuré pour enclencher le rebord (33), et un côté opposé enclenchant un élément de ressort (13) sollicitant le verrou d'accrochage dans sa position d'accrochage et fournissant une force de coincement, dans lequel le ressort est configuré pour exercer une force d'accrochage et de coincement dans une direction décalée de l'axe de pivotement (12).

5. Élément de fixation selon l'une quelconque des revendications précédentes, le cache (4) comprenant un côté mur pourvu d'une cavité (32) configurée pour s'ajuster au-dessus de la base montée sur le mur (3), le rebord (33) encadrant une partie de la cavité.

6. Élément de fixation selon la revendication 5, dans lequel le cache comprend une face de côté avec une ouverture (41) d'un côté du rebord (33) opposé au côté de rebord en regard du mur après montage du cache, l'ouverture (41) fournissant un accès à une broche pour pousser le verrou d'accrochage contre l'action du ressort (13).

7. Élément de fixation selon la revendication 5 ou 6, dans lequel la cavité (32) a une section (47) avec un dégagement (37) recevant un bord biseauté (27) concordant de la base montée sur le mur.

8. Élément de fixation selon l'une quelconque des revendications 5 à 7 précédentes, dans lequel la cavité (32) du cache (4) est profilée pour former un ajustement serré avec la largeur locale de la base (3) afin de bloquer un déplacement relatif dans une direction perpendiculaire à la direction de coincement.

9. Élément de fixation selon l'une quelconque des revendications 5 à 8 précédentes, dans lequel la cavité (32) du cache (4) est profilée pour former un ajustement avec jeu avec la largeur locale de la base (3) afin de fournir un jeu pour un déplacement relatif dans une direction perpendiculaire à la direction de coincement.

10. Élément de fixation selon l'une quelconque des revendications précédentes, comprenant un ou plusieurs éléments de prétensionnement (23) poussant contre le cache (4) lorsqu'il est monté sur la plaque de base (3).

11. Élément de fixation selon la revendication 10, dans lequel les éléments de prétensionnement comportent un ou plusieurs éléments en caoutchouc maintenus dans une ouverture ou un évidement correspondant dans la base (3) avec une partie saillante poussant contre le cache (4) lorsqu'il est monté.
